# EUROPÄISCHE PATENTSCHRIFT

(11) **EP 1 053 673 B1**
(45) Veröffentlichungstag und Bekanntmachung des Hinweises auf die Patenterteilung: **04.08.2004**
(21) Anmeldenummer: 00109576.9
(22) Anmeldetag: 05.05.2000
(51) Int. Cl.: A01F 15/08, G06K 7/00

(54) **Anordnung zum Abspeichern von ballenspezifischen Daten**
Device to store specific data from bales
Dispositif pour l'enrégistrement des données spécifiques des balles

(30) Priorität: 19.05.1999 DE 19922833
(43) Veröffentlichungstag der Anmeldung: 22.11.2000
(73) Patentinhaber: DEERE & COMPANY, Moline, Illinois 61265-8098 (US)
(72) Erfinder: Ohlemeyer, Heinrich, 32479 Hille (DE); Kormann, Georg, 85350 Freising (DE)
(74) Vertreter: Holst, Sönke, Dr.

(56) Entgegenhaltungen:
- WO-A-97/49076
- AU-A- 6 872 794
- DE-A- 19 543 343
- US-A- 4 479 427
- US-A- 5 798 694
- INTRAWOOL AUSTRALIA TASK LIST-AMENDED APRIL '99 (INTRAWOOL AUSTRALIA) URL:http://dev.inter-serv.com.au/awex_corp /PDF/IP/pres06.pdf 8.Juli 1999 (1999-07-08) XP002143387

## Beschreibung

Die Erfindung betrifft eine Anordnung zum Abspeichern von ballenspezifischen Daten, mit einem Sensor zum Erfassen von Parametern in einen Ballen eingebrachten Erntegutes, sowie einer Einrichtung zum Abspeichern von Daten, die eine Information über die vom Sensor erfaßten Werte enthalten, auf einem elektronischen Speichermedium, sowie ein entsprechendes Verfahren.

Aus der DE 19543343 A ist eine landwirtschaftliche Ballenpresse mit einer Anordnung gattungsgemäßer Art bekannt geworden, die mit einer Sensorik zur Messung der Belastung der Arbeitsorgane sowie einer Vorrichtung zur Ermittlung der aktuellen geographischen Position versehen ist. Außerdem wird die Masse eines fertigen Ballens gewogen. Anhand der positionsabhängig abgespeicherten Meßwerte der Sensorik und der gewogenen Masse wird die aufgenommene Gutmasse in Abhängigkeit von den einzelnen Positionen bestimmt. Auch die Feuchtigkeit der aufgenommenen Gutmasse kann als Funktion der Position erfaßt werden. Auf diese Weise erhält man eine Ertragskarte, die beispielsweise auf Chipkarten oder Disketten abgespeichert wird.

In der DE 3232746 A ist eine Erntemaschine, insbesondere Ballenpresse beschrieben, bei der Mittel zur Feuchtemessung vorgesehen sind. Die Feuchtemessung erfolgt u. a. durch Infrarotlicht und das Meßergebnis kann dazu dienen, über eine geeignete Regeleinrichtung im weiteren Weg des Erntegutes Konservierungsmittel maßgerecht zuzuteilen. Bei Übersteigen einer einstellbaren Feuchtegrenze wird das Erntegut mittels einer geeigneten Einrichtung, z.B. zum Färben des Gutes oder Bindegarnes oder durch Zeichenanheftung, gekennzeichnet.

Das der Erfindung zugrunde liegende Problem wird darin gesehen, daß im Stande der Technik nur eine Kennzeichnung eines Ballens, dessen Feuchtigkeit einen bestimmten Schwellenwert überschreitet, möglich ist. Es ist nicht möglich, andere Parameter der einzelnen Ballen zu erfassen.

Dieses Problem wird erfindungsgemäß durch die Lehre der Patentansprüche 1, 10 und 16 gelöst, wobei in den weiteren Patentansprüchen Merkmale aufgeführt sind, die die Lösung in vorteilhafter Weise weiterentwickeln.

Auf diese Weise wird es möglich, den einzelnen Ballen wenigstens einen Parameter des Erntegutes eindeutig zuzuordnen. Der gespeicherte Parameter des Ballens kann auch noch, nachdem er vom Feld abgefahren wurde, am Lagerort durch ein geeignetes Lesegerät ausgelesen werden. Der Besitzer des Ballens besitzt daher auch noch nach der Ernte, bis zur Verwendung des Ballens, die Möglichkeit, diesen Parameter auszulesen. Der Parameter wird bei der Herstellung des Ballens durch den Sensor erfaßt und auf einem elektronischen Speichermedium in analoger oder (bevorzugt) digitaler Form abgelegt. Dabei werden Daten auf dem Speichermedium abgelegt, die eine Information über die vom Sensor abgegebenen Meßwerte enthalten, was bedeutet, daß die Meßwerte des Sensors direkt, oder in aufbereiteter Form abgespeichert werden können; beispielsweise kann der Meßwert für die Masse des Ballens in der Maßeinheit kg abgespeichert werden, oder ein Feuchtigkeitsgehalt in Prozentwerten. Auch ist eine Mittelwertbildung aus mehreren Meßwerten, z. B. der Feuchtigkeit, möglich. Das Speichermedium wird in den Ballen eingebracht oder außen daran befestigt. Das Einbringen in den Ballen hat den Vorteil, daß das elektronische Speichermedium geschützt im Ballen positioniert ist.

Es sind beliebige elektronische oder elektromagnetische Speichermedien verwendbar, wie z. B. magnetisierbare Filme, die aus der elektronischen Artikelsicherung bekannt sind. Vorzugsweise findet ein Mikrochip Verwendung, insbesondere ein Transponderchip. Der Vorteil besteht neben der Preiswürdigkeit darin, daß ein Auslesen der im Transponderchip abgelegten Informationen auch aus einem größeren Abstand möglich ist. Daher kann der (oder die) Parameter auch ausgelesen werden, wenn sich der Transponderchip noch im Ballen befindet. Ein Entnehmen des elektronischen Speichermediums aus dem Ballen erübrigt sich damit. Auch andere, fernablesbare Speichermedien sind gut geeignet, wie die oben genannten magnetisierbaren Filme.

Weiterhin ist vorgeschlagen, daß das elektronische Speichermedium nach der Fertigstellung eines Ballens in letzteren eingebracht wird. Denkbar wäre auch, es bei der Fertigstellung, bzw. kurz davor, in den Ballen einzubringen. Dadurch wird ermöglicht, den gesamten Inhalt des Ballens mit dem Sensor zu untersuchen, und einen Mittelwert der gemessenen Parameter auf dem elektronischen Speichermedium abzulegen. Denkbar wäre auch ein Ablegen mehrerer Meßwerte, die im aufgenommenen Gut im zeitlichen Abstand, oder an verschiedenen Stellen des Ballens aufgenommen wurden. Das Lesegerät kann dann alle Meßwerte anzeigen, oder sie einer weiteren Auswertung unterziehen, wie einer Mittelwertbildung und/oder der Berechnung einer Standardabweichung. Letztere enthält eine Information über die Homogenität des erfaßten Parameters des im Ballen enthaltenen Erntegutes. Eine Standardabweichung kann selbstverständlich auch gemeinsam mit einem Mittelwert im elektronischen Speichermedium abgelegt werden.

Der Sensor kann einen oder mehrere unterschiedliche Parameter des Erntegutes erfassen. So ist denkbar, die Masse des Ballens mittels einer Waage zu messen, wie sie beispielsweise aus der US 4742880 bekannt geworden ist, die durch Verweis hierin aufgenommen wird. Die Masse des Ballens kann auch durch Kraftmessung oder radiometrisch gemessen werden. Außerdem kann der Feuchtigkeitsgehalt des Ballens gemessen werden, was mittels einer Leitwertmessung, kapazitiv, dielektrisch, durch Mikrowellen in Transmission bzw. Reflexion oder durch Infrarotmeßverfahren erfolgen kann. Weiterhin ist auch eine Messung der Inhaltsstoffe (wie Proteine, Stärke, Vitamine, etc.) des Ballens denkbar, die durch entsprechende Sensoren erfolgen kann. Derartige Sensoren können sich der - eine Messung des Gehalts einzelner Elemente im Erntegut erlaubenden - Raman-Spektroskopie bedienen, wie sie in der EP 615682 A beschrieben ist, die durch Verweis hierin aufgenommen wird. Auch durch Infrarot-Spektroskopie oder chemische oder optische Sensoren (US 5044756) können einzelne Inhaltsstoffe nachgewiesen werden. Weiterhin kann die Position, an dem der Ballen entstanden ist, durch ein GPS-System erfaßt und im elektronischen Speichermedium abgelegt werden.

Die Meßwerte des Sensors können - zusätzlich zur Abspeicherung auf dem Mikrochip - auch auf anderen Medien abgespeichert werden. Diese Daten können insbesondere zur Ertragskartierung dienen, falls ein (GPS-) Empfänger zur Positionsbestimmung vorhanden ist. Es bietet sich insbesondere an, die Daten auf einem Speichermedium, wie einer Festplatte, Diskette oder CD abzuspeichern. Der dazu benötigte Speicher und/oder Auswertungsrechner kann in einem vor die Ballenpresse gespannten Zugfahrzeug, in der Ballenpresse oder an einer beliebigen anderen Stelle, wie einem landwirtschaftlichen Betrieb, positionert sein. Im letztgenannten Fall werden die Daten beispielsweise über Funk übertragen. Desweiteren läßt sich durch Speicherung und kontinuierliche Übertragung der gewonnenen Daten per Funkstrecke zu einem Logistikzentrum oder einzelnen mobilen Einheiten die gesamte weitere Logistik für Abtransport, Einlagerung und Weiterverarbeitung beeinflussen bzw. steuern, wie beispielsweise die Ladekapazitäten beim Abtransport.

Außerdem ist es aus Tierschutzgründen und, um das elektronische Speichermedium wiederverwenden zu können, wünschenswert, das elektronische Speichermedium wieder aus dem Ballen zu entnehmen, bevor der Ballen verfüttert wird. Aus diesem Grunde ist vorgeschlagen, eine Einrichtung vorzusehen, mit der das elektronische Speichermedium unschwer aus dem Ballen entnommen werden kann. Eine derartige Einrichtung ist beispielsweise ein farbiges Band, das am elektronischen Speichermedium befestigt wird. Mittels des Bandes kann das Speichermedium einfach aus dem Ballen herausgezogen werden. Ist das Speichermedium außen am Ballen befestigt, kann ein farbiges Etikett aus textilem Material oder in Form einer Kunststoffolie das Speichermedium kennzeichnen. Ein derartiges Etikett kann auch an einem Ende des oben beschriebenen Bandes angebracht sein. Es gibt auch Anwendungsfälle, in denen sich das Entnehmen des elektronischen Speichermediums erübrigt, beispielsweise, wenn das im Ballen enthaltene Erntegut maschinell weiterverarbeitet wird.

Schließlich können die Meßwerte des Sensors zur Steuerung der Ballenpresse dienen. Bevorzugt ist, daß die Größe des Ballens von der Feuchtigkeit abhängig ist, und bei einem hohen Feuchtigkeitsgehalt kleiner als bei einem niedrigen Feuchtigkeitsgehalt ist, um eine etwa konstante Masse zu erzielen. Auch andere Funktionen der Ballenpresse, wie Preßdruck und Garnmenge können in Abhängigkeit von den Meßwerten des Sensors gesteuert werden.

Um ein elektronisches Speichermedium in einen Ballen einbringen oder einschießen zu können, ist eine Vorrichtung geeignet, die einen Vorrat an elektronischen Speichermedien und eine Einrichtung, vorzugsweise eine Feder, mit der ein elektronisches Speichermedium in Richtung auf einen Ballen zu beschleunigbar ist, aufweist.

In den Zeichnungen ist ein nachfolgend näher beschriebene Ausführungsbeispiel der Erfindung dargestellt. Es zeigt:
- Fig. 1: eine Ballenpresse in Seitenansicht und in schematischer Darstellung; und
- Fig. 2: eine Vorrichtung zum Einbringen eines elektronischen Speichermediums in einen Ballen.

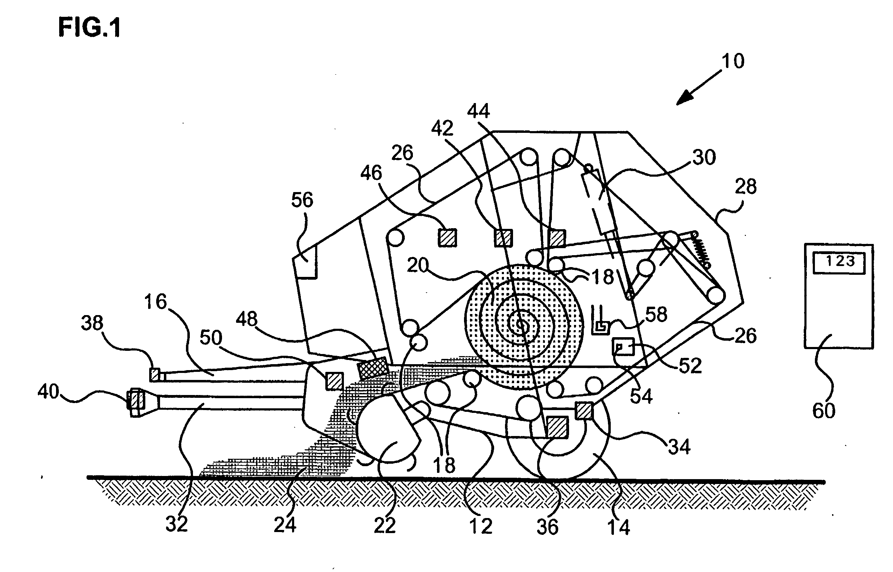

Die in Figur 1 dargestellte Ballenpresse 10 besitzt einen Rahmen 12, der sich über Räder 14 auf dem Boden abstützt, mittels einer Deichsel 16 an ein nicht gezeigtes Zugfahrzeug angehängt werden kann und Rollen 18, die einen Ballenpreßraum umgeben, in dem sich in der Zeichnung ein Ballen 20 befindet. Bei der dargestellten Ballenpresse 10 handelt es sich um eine Rundballenpresse mit einem Ballenpreßraum veränderlicher Größe, dem über eine Aufnahmevorrichtung 22 in Form einer Pick-Up auf dem Boden liegendes Erntegut 24 für einen Preßvorgang zugeführt wird. Allerdings kann es sich bei der Ballenpresse 10 auch um eine anderer Bauart handeln, z. B. um eine Rundballenpresse mit Ballenpreßraum unveränderlicher Größe oder eine Quaderballenpresse.

Die Rollen 18 der Ballenpresse 10 dienen dazu, das Erntegut 24 zu einem Ballen 20 zu formen und letzteren mit Garn 26 zu umwickeln. Ist ein Ballen 20 fertiggestellt, wird eine hintere Haube 28 der Ballenpresse 10 mittels eines Hydraulikzylinders 30 nach oben geklappt und der Ballen 20, nachdem er mit Garn 26 umwickelt ist, nach hinten aus der Ballenpresse 10 herausgefördert und auf dem Feld abgelegt. Denkbar wäre, der Ballenpresse 10 ein Wickelgerät nachzuordnen, mit dem der Ballen 20 zur Herstellung von Silage mit einer wasserundurchlässigen Folie umwickelt wird. Der mechanische Antrieb der Rollen 18 erfolgt über eine Zapfwelle 32. Da die Ballenpresse als solche bekannt ist, erübrigt sich eine detailliertere Beschreibung.

Erfindungsgemäß ist die Ballenpresse 10 mit einer Anzahl an Sensoren ausgestattet. Ein erster Sensor 34 mißt die von der Ballenpresse 10 zurückgelegte Wegstrecke; er erfaßt beispielsweise die Anzahl der Umdrehungen des Rades 14 mittels eines magnetbetätigten Reed-Relais. Ein zweiter Sensor 36 ist eine Wägezelle zur Erfassung der Masse des Ballens 20. Ein dritter Sensor 38 ist ein Kraftsensor, der die Belastung der Deichsel 16 erfaßt und ebenfalls als Massensensor dient, da die Belastung der Deichsel 16 ein Maß für die Masse des Ballens 20 ist. Ein vierter Sensor 40 mißt die Drehzahl der Zapfwelle 32, die ein Maß für die Belastung der Zugmaschine durch die Ballenpresse 10 ist, und eine Information über die zum Herstellen des Ballens 20 erforderliche Leistung enthält. Ein fünfter Sensor 42 erfaßt, ob der Ballenpreßraum geschlossen oder zum Auswerfen eines Ballens 20 geöffnet ist. Ein sechster Sensor 44 mißt die Größe des Ballens, d. h. seinen Durchmesser. Ein siebter Sensor 46 erfaßt, ob ein Bindevorgang stattfindet. Ein achter Sensor 48 ist am Strom des aufgenommenen Erntegutes 24 angeordnet und mißt die Feuchtigkeit des Erntegutes 24. Ein neunter Sensor 50 stellt fest, ob überhaupt eine Aufnahme von Erntegut 24 erfolgt, oder nicht. Die genannten neun Sensoren 34 - 50 sind mit einer Steuerung 56 verbunden, in der die Meßwerte der Sensoren 34 - 50 temporär abgespeichert werden. Wenn der fünfte Sensor 42 meldet, daß der Ballenpreßraum geöffnet ist, und/oder der siebte Sensor 46 einen Bindevorgang erfaßt, speichert die Steuerung 56 die für den zuletzt hergestellten Ballen 20 gemessenen Meßwerte eines oder mehrerer der Sensoren 34 - 50 in einem Transponderchip 54 ab. Dazu dient eine mit der Steuerung 56 verbundene Antenne 58, die in der unmittelbaren Nähe einer Einbringvorrichtung 52 positioniert ist. Mittels der Antenne 58 werden somit Daten, die eine Information über die Meßwerte enthalten, insbesondere über mehrere nacheinander aufgenommene Meßwerte eines Sensors, oder einen Mittelwert, in den Transponderchip 54 eingeschrieben, wobei die Energie für den Transponderchip 54 in an sich bekannter Weise die Antenne 58 bereitstellt. Nach dem Abspeichern der Meßwerte im Transponderchip 54 wird die Einbringvorrichtung 52 durch die Steuerung 56 aktiviert und der Transponderchip 54 durch die Einbringvorrichtung 52 in den Ballen 20 hineingeschossen oder an ihm befestigt, z. B. angeheftet. Mittels eines Lesegerätes 60 können die Meßwerte aus dem Transponderchip 54 wieder ausgelesen werden.

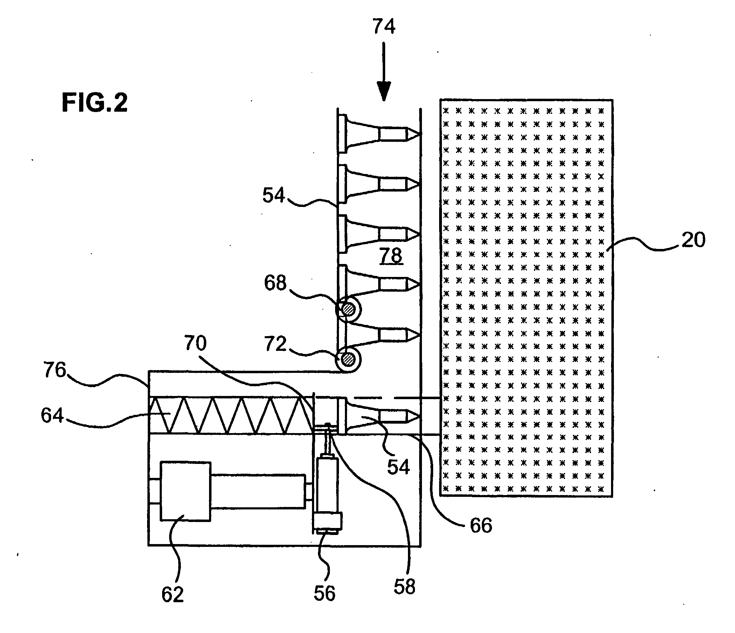

In Figur 2 ist eine Einbringvorrichtung 52 näher dargestellt. Sie umfaßt eine Grundplatte 66, die innerhalb eines Gehäuses 76 angeordnet ist, und auf der ein Schlitten 70 verschiebbar gelagert ist. Der Schlitten 70 stützt sich über eine Feder 64 an einer mit der Grundplatte 66 verbundenen Rückwand des Gehäuses 76 ab. Die Feder 64 befindet sich in einem Metallrohr, das auch der Führung des Transponderchips 54 dient. Der Schlitten 70 ist außerdem mit einem Motor 62 verbunden. Der Motor 62 ist ein Elektromotor, kann aber auch ein Hydraulikmotor oder -zylinder sein, und ist zum Spannen der Feder 64 eingerichtet. Mittels eines zweiten Motors 56 ist ein Verriegelungsmechanismus 58 in Betriebsstellung bzw. Außerbetriebsstellung verbringbar.

Ist der Verriegelungsmechanismus 58 in Betriebsstellung, ist eine Bewegung des Schlittens 70 entgegen der Kraft der Feder 64 unterbunden, und der Schlitten 70 in seiner in Figur 2 dargestellten Ruheposition arretiert. Verbringt der zweite Motor 56, der nach Abschluß der Datenaufnahme und des Preßvorganges durch ein entsprechendes Signal aktiviert wird, den Verriegelungsmechanismus 58 in Außerbetriebsstellung, ist die Arretierung des Schlittens 70 aufgehoben und er beschleunigt aufgrund der Wirkung der Feder 64 einen vor dem Schlitten 70 positionierten Transponderchip 54 mit einer an seiner Vorderseite angeordneten Pfeilspitze voran in Richtung auf den Ballen 20 zu, so daß er sich in den Ballen 20 hineinbohrt. Anschließend wird der Schlitten 70 mittels des Motors 62 wieder nach links in eine Position verfahren, in der die Feder 64 wieder gespannt ist, und in der der Verriegelungsmechanismus 58 in Betriebsstellung verbringbar ist.

Weitere Transponderchips 54 sind in einem Magazin 74 bereitgestellt und können durch Einwirkung der Schwerkraft sukzessive vor dem Schlitten 70 positioniert werden. Jeweils der vor dem Schlitten 70 angeordnete Transponderchip 54 wird durch die Antenne 58 mit Daten beaufschlagt. Damit jeweils nur ein Transponderchip 54 vor den Schlitten 70 verbracht wird, ist ein oberer Schließbolzen 68 und ein unterer Schließbolzen 72 vorgesehen. Der obere Schließbolzen 68 befindet sich oberhalb eines zwischen beiden Schließbolzen vorgesehenen Zwischenspeichers 78, der zur Aufnahme eines Transponderchips 54 eingerichtet ist. Seine Aufgabe besteht darin, nur einen Transponder in den Zwischenspeicher 78 hineinzulassen. Er hält die restlichen Transponderchips 54 davon ab, in den Zwischenspeicher 78 nachzurutschen. Der untere Schließbolzen 72 ist vorgesehen, den sich im Zwischenspeicher 78 befindlichen Transponderchip 54 zum erwünschten Zeitpunkt in die Einbringvorrichtung 52 einzulegen und vor dem Schlitten 70 zu positionieren. Er ist verschlossen, wenn der obere Schließbolzen geöffnet ist, um zu verhindern, daß weitere Transponderchips 54 nachrutschen.

Im Ergebnis erhält man eine Anordnung, die das Abspeichern und Auslesen ballenspezifischer Meßwerte ermöglicht. Die Erfindung ist allgemein an allen landwirtschaftlichen Einrichtungen, mit denen Erntegut in einen Ballen oder ein Bündel gebracht wird, verwendbar.

## Patentansprüche

1. Anordnung zum Abspeichern von ballenspezifischen Daten, mit einem Sensor (34 - 50) zum Erfassen von Parametern in einen Ballen (20) eingebrachten Erntegutes (24), sowie einer Einrichtung zum Abspeichern von Daten, die eine Information über die vom Sensor (34 - 50) erfaßten Werte enthalten, auf einem elektronischen Speichermedium, **gekennzeichnet durch** eine Vorrichtung (52), mit der das elektronische Speichermedium in den Ballen (20) einbringbar und/oder an dem Ballen (20) fixierbar ist.

2. Anordnung nach Anspruch 1, **dadurch gekennzeichnet, daß** das elektronische Speichermedium ein Mikrochip ist.

3. Anordnung nach Anspruch 1 oder 2, **dadurch gekennzeichnet, daß** das elektronische Speichermedium ein Transponderchip (54) ist.

4. Anordnung nach einem der vorhergehenden Ansprüche, **dadurch gekennzeichnet, daß** die Vorrichtung (52), mit der das elektronische Speichermedium in den Ballen (20) einbringbar und/oder am Ballen (20) fixierbar ist, das elektronische Speichermedium selbsttätig bei oder nach Fertigstellung eines Ballens (20) in den Ballen (20) einbringt und/oder daran fixiert.

5. Anordnung nach einem der vorhergehenden Ansprüche, **dadurch gekennzeichnet, daß** der Sensor (34 - 50) die Position und/oder die Masse und/oder die Feuchtigkeit und/oder einen Gehalt an Inhaltsstoffen des Ballens (20) mißt.

6. Anordnung nach einem der vorhergehenden Ansprüche, **dadurch gekennzeichnet, daß** die Meßwerte des Sensors (34 - 50) zusätzlich gespeichert und/oder auf einen Speicherund/oder Auswertungsrechner übertragen werden, vorzugsweise mit einer positionsabhängigen Information.

7. Anordnung nach einem der vorhergehenden Ansprüche, **dadurch gekennzeichnet, daß** am elektronischen Speichermedium eine Einrichtung, beispielsweise ein aus dem Ballen herausragendes, farbiges Band und/oder Etikett, befestigt ist, mittels der das elektronische Speichermedium aus dem Ballen leicht entnehmbar und/oder vom Ballen abnehmbar ist.

8. Ballenpresse (10) mit einer Anordnung nach einem der vorhergehenden Ansprüche.

9. Ballenpresse (10) nach Anspruch 8, **dadurch gekennzeichnet, daß** die Meßwerte des Sensors (34 - 50) zur Steuerung der Ballenpresse, insbesondere der Ballengröße oder des Pressendrucks, verwendet werden.

10. Verfahren zum Ablegen ballenspezifischer Daten in einem Ballen (10) aus Erntegut (24), mit folgenden Schritten: Aufnehmen von Erntegut (24), Erfassen wenigstens eines Parameters des Erntegutes (24) mittels eines Sensors (34 - 50), Herstellen eines Ballens (20) aus dem Erntegut (24), und Abspeichern von Daten, die eine Information über die vom Sensor (34 - 50) erfaßten Werte enthalten, auf einem elektronischen Speichermedium, **dadurch gekennzeichnet, daß** das elektronische Speichermedium in den Ballen (20) eingebracht und/oder daran befestigt wird.

11. Verfahren nach Anspruch 9, **dadurch gekennzeichnet, daß** das Speichermedium selbsttätig nach der Fertigstellung eines Ballens (20) in den Ballen (20) eingebracht und/oder daran fixiert wird.

12. Verfahren nach Anspruch 9 oder 10, **dadurch gekennzeichnet, daß** der im elektronischen Speichermedium abgespeicherte Meßwert mittels eines Lesegeräts (60) ausgelesen wird.

13. Verfahren nach Anspruch 11, **dadurch gekennzeichnet, daß** das Lesegerät (60) beim Auslesen des Meßwerts im Abstand vom elektronischen Speichermedium angeordnet ist.

14. Verfahren nach einem der Ansprüche 9 bis 12, **dadurch gekennzeichnet, daß** das elektronische Speichermedium aus dem Ballen (20) entnommen wird, bevor er verwendet oder verfüttert wird.

15. Verfahren nach einem der Ansprüche 9 bis 13, **dadurch gekennzeichnet, daß** die Masse und/oder die Feuchtigkeit und/oder ein Gehalt an Inhaltsstoffen mit dem Sensor (34 - 50) erfaßt und auf dem elektronischen Speichermedium abgespeichert wird.

16. Vorrichtung (52) zum Einbringen eines elektronischen Speichermediums (54) in einen Ballen (20) aus Erntegut (24), insbesondere für eine Anordnung nach einem der Ansprüche 1 bis 7 oder zur Durchführung des Verfahrens nach einem der Ansprüche 8 bis 15, **gekennzeichnet durch** einen Vorrat an elektronischen Speichermedien (54) und eine Einrichtung, vorzugsweise eine Feder (64), mit der ein elektronisches Speichermedium (54) in Richtung auf einen Ballen (20) zu beschleunigbar ist.

## Claims

1. Arrangement for storing data which is specific to bales, having a sensor (34 - 50) for detecting parameters of crop material (24) formed into a bale (20), and a device for storing data, which contain information about the values detected by the sensor (34 - 50), on an electronic storage medium, **characterised by** a device (52) with which the electronic storage medium can be inserted into the bale (20) and/or can be fixed on the bale (20).

2. Arrangement according to claim 1, **characterised in that** the electronic storage medium is a microchip.

3. Arrangement according to claim 1 or 2, **characterised in that** the electronic storage medium is a transponder chip (54).

4. Arrangement according to one of the preceding claims, **characterised in that** the device (52), with which the electronic storage medium can be inserted into the bale (2)) and/or can be fixed to the bale (20), inserts the electronic storage medium into the bale (20) and/or fixes it thereon automatically during or after production of a bale (20).

5. Arrangement according to one of the preceding claims, **characterised in that** the sensor (34 - 50) measures the position and/or the mass and/or the moisture and/or the content of contained materials of the bale (20).

6. Arrangement according to one of the preceding claims, **characterised in that** the measured values of the sensor (34 - 50) are in addition stored and/or transmitted to a memory and/or evaluation computer, preferably with position-dependent information.

7. Arrangement according to one of the preceding claims, **characterised in that**, on the electronic storage medium, a device, for example a coloured band and/or label which protrudes from the bale, is attached, by means of which the electronic storage medium can be easily taken out of the bale and/or removed from the bale.

8. Baling press (10) having an arrangement according to one of the preceding claims.

9. Baling press (10) according to claim 8, **characterised in that** the measured values of the sensor (34 - 50) are used for controlling the baling press, in particular the bale size or the press pressure.

10. Method for depositing data which is specific to bales in a bale (10) made of crop material (24) with the following steps:
picking up crop material (24),
detection of at least one parameter of the crop material (24) by means of a sensor (34 - 50),
production of a bale (20) made of crop material (24), and
storage of data, which contain information about the values detected by the sensor (34 - 50) on an electronic storage medium,
**characterised in that** the electronic storage medium is inserted into the bale (20) and/or fixed thereon.

11. Method according to claim 9, **characterised in that** the storage medium is inserted into the bale (20) and/or fixed thereon automatically after production of a bale (20).

12. Method according to claim 9 or 10, **characterised in that** the measured value stored in the electronic storage medium is read out by means of a reader (60).

13. Method according to claim 11, **characterised in that** the reader (60) is disposed at a spacing from the electronic storage medium during reading-out of the measured value.

14. Method according to one of the claims 9 to 12, **characterised in that** the electronic storage medium is taken out of the bale (20) before it is used or provided as feed.

15. Method according to one of the claims 9 to 13, **characterised in that** the mass and/or the moisture and/or the content of contained materials is detected by the sensor (34 - 50) and stored on the electronic storage medium.

16. Device (52) for inserting an electronic storage medium (54) into a bale (20) made of crop material (24), in particular for an arrangement according to one of the claims 1 to 7, or for implementing the method according to one of the claims 8 to 15, **characterised by** a stock of electronic storage media (54) and a device, preferably a spring (64), with which an electronic storage medium (54) can be accelerated in the direction of a bale (20).

## Revendications

1. Dispositif pour l'enregistrement de données spécifiques des balles avec un capteur (34 - 50) destiné à détecter des paramètres dans un produit récolté (24) mis en balles (20), ainsi qu'avec un équipement pour l'enregistrement de données, qui contiennent une information sur les valeurs détectées par le capteur (34 - 50), sur un support d'enregistrement électronique, **caractérisés par** un appareil (52) avec lequel le support d'enregistrement électronique peut être introduit dans la balle (20) et/ou fixé à la balle (20).

2. Dispositif selon la revendication 1, **caractérisé en ce que** le support d'enregistrement électronique est une puce électronique.

3. Dispositif selon la revendication 1 ou 2, **caractérisé en ce que** le support d'enregistrement électronique est une puce émetteur-récepteur.

4. Dispositif selon l'une quelconque des revendications précédentes, **caractérisé en ce que** l'appareil (52), avec lequel le support d'enregistrement électronique peut être introduit dans la balle (20) et/ou fixé à la balle (20), introduit automatiquement le support d'enregistrement électronique dans la balle (20) ou le fixe à la balle pendant ou après la confection d'une balle (20).

5. Dispositif selon l'une quelconque des revendications précédentes, **caractérisé en ce que** le capteur (34 - 50) mesure la position et/ou la masse et/ou l'humidité et/ou une teneur des matières contenues dans la balle (20).

6. Dispositif selon l'une quelconque des revendications précédentes, **caractérisé en ce que** les valeurs mesurées par le capteur (34 - 50) sont en plus enregistrées et/ou transmises à un ordinateur de stockage et/ou d'analyse, de préférence avec une information liée à la position.

7. Dispositif selon l'une quelconque des revendications précédentes, **caractérisé en ce que**, sur le support d'enregistrement électronique est fixé un système, par exemple une bande et/ou une étiquette colorée sortant de la balle, au moyen duquel le support d'enregistrement électronique peut être facilement retiré de la balle et/ou détacher de la balle.

8. Presse de balle (10) avec un dispositif selon l'une quelconque des revendications précédentes.

9. Presse de balle (10) selon la revendication 8, **caractérisée en ce que** les valeurs mesurées par le capteur (34 - 50) sont employées pour commander la presse de balle, en particulier la taille de la balle ou la pression de la presse.

10. Procédé pour déposer des données spécifiques des balles dans une balle (10) d'un produit récolté (24) ayant les étapes suivantes consistant à :
recueillir le produit récolté (24),
détecter au moins un paramètre du produit récolté (24) au moyen d'un capteur (34 - 50),
confectionner une balle (20) avec le produit récolté (24) et enregistrer sur un support d'enregistrement électronique des données qui contiennent une information sur les valeurs détectées par le capteur (34 - 50),
**caractérisé en ce que** le support d'enregistrement électronique est introduit dans la balle (20) et/ou fixé à la balle (20).

11. Procédé selon la revendication 9, **caractérisé en ce que** le support d'enregistrement est introduit automatiquement dans la balle (20) ou fixé à la balle (20) après la confection d'une balle (20).

12. Procédé selon la revendication 9 ou 10, **caractérisé en ce que** la valeur mesurée enregistrée dans le support d'enregistrement est lue au moyen d'un appareil de lecture (60).

13. Procédé selon la revendication 9 ou 10, **caractérisé en ce que** l'appareil de lecture (60) est placé à une certaine distance du support d'enregistrement électronique lors de la lecture de la valeur mesurée.

14. Procédé selon l'une quelconque des revendications 9 à 12, **caractérisé en ce que** le support d'enregistrement électronique est retiré de la balle (20) avant qu'elle soit employée ou consommée comme fourrage.

15. Procédé selon l'une quelconque des revendications 9 à 13, **caractérisé en ce que** la masse et/ou l'humidité et/ou une teneur en matières contenues est détectée avec le capteur (20) et enregistrée sur le support d'enregistrement électronique.

16. Appareil (52) pour introduire un support d'enregistrement électronique(54) dans une balle (20) d'un produit récolté (24), en particulier pour un dispositif selon l'une quelconque des revendications 1 à 7 ou pour exécuter le procédé selon l'une quelconque des revendications 8 à 15, **caractérisé par** un stock de réserve en supports d'enregistrement électroniques (54) et une installation, de préférence un ressort (64), avec laquelle un support d'enregistrement électronique (54) peut être accéléré en direction d'une balle (20).
